Europäisches Patentamt

European Patent Office

Office européen des brevets

(11) Publication number: **0 357 301**
**A1**

## (12) EUROPEAN PATENT APPLICATION

(21) Application number: **89308380.8**

(22) Date of filing: **17.08.89**

(51) Int. Cl.5: **B29C 67/14**

(30) Priority: **18.08.88 GB 8819648**

(43) Date of publication of application:
**07.03.90 Bulletin 90/10**

(84) Designated Contracting States:
**ES GR**

(71) Applicant: **NORSK HYDRO A/S**
**Postboks 2594 Solli**
**N-0203 Oslo 2(NO)**

(72) Inventor: **Davies, John Idwal**
**1 Walnut Tree Close**
**Hayling Island Hampshire PO11 9BD(GB)**
Inventor: **Maddison, James Rylance**
**25 Fourth Avenue Denvilles**
**Havant Hampshire PO9 2QU(GB)**

(74) Representative: **Allen, Oliver John Richard et al**
**Lloyd Wise, Tregear & Co. Norman House**
**105-109 Strand**
**London, WC2R 0AE(GB)**

(54) **Improvements in and relating to the production of fibre reinforced polymers.**

(57) A method of forming a fibre reinforced product from a polymer and fibrous reinforcement is described. The method involves the use of a device operable to melt a portion of polymer and then to heat the molten polymer portion to high temperature and inject it at high pressure into a cavity of a die. The fibrous reinforcement is positioned in the die cavity and the operation of the device is controlled so that molten polymer is injected into the cavity when the reinforcement is positioned therein so that the reinforcement is impregnated with the molten polymer. The method allows the production of fibre reinforced polymers with good fibre length and good wetting of the fibres with the polymer. The die may be arranged with an entrance and exit passageway leading to and from the die cavity so that a continuous length of fibrous reinforcement can be passed through the die cavity. When a continuous length of fibrous reinforcement is to be impregnated, a plurality of melt and injection devices may be employed, their operation portion being controlled so that a continuous stream of molten polymer is injected into the die cavity so that a fully continuous process can be carried out.

Fig. 5.

This invention relates to reinforced plastics compositions and in particular to the impregnation of the reinforcement with polymeric materials.

Compositions comprising polymeric materials and fibres for use in the production of the components which require high stiffness are well known. When the polymeric material is a thermoset, a known process for the production of the composite comprises pulling a roving of glass fibres through the thermoset resin to impregnate the fibres and subsequently heating the product to cure the thermoset. This process is known as pultrusion. The low viscosity of thermoset resin means that good wetting of the fibres can be achieved and composites with long fibres can be produced.

However, this process cannot be employed with thermoplastic materials since such materials have a much greater viscosity and good wetting of the fibres is not obtained. To achieve good wetting, work in the form of shear has to be applied to the mixture. A method for achieving this is to feed the fibres and polymer into a screw extruder which will provide the necessary shear. However, this causes the fibres to decrease in length with a consequent reduction in modulus of the composite. It has been found that the maximum length of fibre which can be maintained and still be well wetted is between 100 μm and 500 μm so that optimum composite properties cannot be realised.

Various variations on the pultrusion process to make it suitable for thermoplastic materials have been suggested. In one suggested process, thermoplastics are employed which have a certain low maximum viscosity. Although the thermoplastics therefore have low molecular weight, the resultant composite is said to have satisfactory physical properties. However, use of this process is limited to only these materials whose viscosity is low enough to fall under the prescribed maximum value. Another process includes supporting the fibres in a bath of thermoplastic material on a spreader and heating the spreader surface to a high temperature to cause the viscosity of the material in this region to be lowered and therefore allow good wetting of the fibres. This localised heating prevents degradation of the remainder of the material in the bath. However, this process is still not suitable for materials with high molecular weight and consequent high viscosity.

Attempts have been made to overcome the problems associated with melts by using the thermoplastic material in different forms. One known method involves impregnating the fibres with powdered material and then consolidating the mixture by heating. However, it is difficult to obtain good, even coating of the fibres with the powder and very high temperatures, well above the consolidation temperatures, are required if the molten thermoplastic is to flow sufficiently to coat the fibres. Moreover, thermoplastics are normally available as granules rather than powders and the step of producing the powder increases the cost of the process.

A second known method which does not require a thermoplastic melt is similar to the pultrusion process described above, but with a solution of the thermoplastic material. The use of this method is limited by the fact that solutions of thermoplastic materials are comparatively rare and expensive. To form the solutions, high temperatures and noxious solvents are required which increases the difficulty of handling the thermoplastic materials and consequently this method has not been widely employed.

The lack of success with alternative forms of thermoplastic materials has meant that interest has been centred on the use of melts and ways of improving the wetting of fibres by the molten material without sacrificing fibre length.

One continuous process which has been increasingly employed involves feeding granules of the thermoplastic into a screw extruder in which it is melted and has work done on it so that the melt which leaves the extruder has as low a viscosity as possible. A special die head is attached to the exit of the extruder so that as the melt is extruded it flows over and around fibres which pass through the die head and coats them.

However, the resultant product has been found to comprise a bundle of fibres with thermoplastic material around the bundle but not between the fibres of the bundle. Although the wetting of the exterior of the bundle is good, there is little thermoplastic material within the bundle and the wetting of individual fibres is unsatisfactory. An improvement which has been suggested involves causing the product to pass along a tortuous route which results in somewhat increased separation of the fibres and improved penetration of thermoplastic material inbetween each fibre, but this adds to the complexity and expense of the process and the apparatus.

Interest in impregnation of fibrous reinforcement has not centred on continuous forms of reinforcement such as rovings and tapes alone. It would be desirable to be able to produce individual articles formed from polymer impregnated fibres for use on their own or as reinforcing inserts for other articles with good polymer-fibre bonding and therefore high strength. However, little success has been achieved in attempts to find a suitable method of production which is able to give acceptable product strength but is not prohibitively expensive.

In accordance with the invention a method of forming a fibre reinforced product from a polymer and fibrous reinforcement comprises positioning the fibrous reinforcement in a cavity of a die, feeding the polymer into at least one device operable to melt a portion of the polymer and raise the temperature of the polymer portion and then to inject the molten polymer portion at high pressure into the die cavity and controlling the operation of the device(s) so that molten polymer is injected into the cavity when the reinforcement is positioned therein so that the reinforcement is impregnated with the molten polymer.

Apparatus in accordance with the invention for forming a fibre reinforced product from a polymer and fibrous reinforcement comprises at least one device operable to melt a portion of the polymer and heat it and then to inject it at high pressure into a cavity of a die, the die being arranged so that the reinforcement can be positioned in the cavity before or as polymer is injected therein and means for controlling the operation of the device(s) so that molten polymer is injected into the die cavity when the fibrous reinforcement is positioned therein so that the fibrous reinforcement is impregnated with molten polymer.

The devices are preferably such as to heat and pressurise the polymer to a high degree so that good flow and wetting of the fibrous reinforcement results. A device which is capable of achieving this is commonly known as an injection moulding machine. This can produce much higher pressure and melt flow rates than the screw extruders employed with known methods. The high injection force due to the high injection pressures aids the impregnation and coating of the fibres with the molten polymer and consequently gives a much better product than can be achieved with any of the known processes, in none of which was it possible to inject molten material into the fibrous reinforcement at high speed. However, the force of the injected polymer is not sufficient to cause the fibres to break and therefore good fibre length in the product may also be achieved.

A single device may be employed to impregnate either fibrous reinforcement which has been preformed into an article of desired configuration or a continuous length of fibrous reinforcement. In the former case the fibrous reinforcement is formed into the required shape and then positioned in the die cavity which is also suitably formed. The die is closed and molten polymer injected into the die cavity to impregnate the reinforcement. The impregnated reinforcement, after removal from the die, may be used simply as it is or may be employed as a reinforcing base for another article. In the latter case, that is with a continuous length of reinforcement, the die is formed with suitable entrance and exit passages leading to the die cavity and the length of fibrous reinforcement is pulled through the cavity in a series of steps timed to ensure that each section of the fibrous reinforcement becomes impregnated.

In a particularly preferred embodiment, two or more melt and injection devices are employed. Preferably each device injects the molten polymer portion into a connector which connects the output of the device and an input to the die cavity. The connection may be such that it can operate to allow partially or wholly simultaneous injection into the cavity from the two or more devices or sequential injection of molten polymer into the die cavity. In the case of simultaneous injection the connectors are preferably such that mixing of the molten polymer injected by the two or more devices occurs before its injection into the die cavity. This means that two different polymers can be mixed and the combination injected into the fibrous reinforcement.

Sequential injection of molten polymer into the die cavity is particularly advantageous since continuous coating of lengths of fibrous reinforcement can be carried out. The normal operation of devices such as an injection moulding machine which heat a portion of polymer and then eject it at high pressure is cyclical . By using two or more such devices connected to a die and controlling them such that a continuous stream of molten polymer is injected into the die cavity, continuous inpregnation of fibrous reinforcement can be achieved. This is obviously economically advantageous.

The connectors may be in the form of a manifold which is operable to selectively connect the output of the devices to the input of the die. A gating system may be provided at the manifold output so that a continuous stream of molten polymer is fed into a cavity or into a number of die cavities in a single die to allow simultaneous impregnation of a number of fibrous reinforcements.

As noted above, the devices are preferably arranged to inject the molten polymer portions sequentially, that is, one device always injecting whilst the others are being fed with polymer and compressing and melting a portion of the polymer. Suitably the end of the injection stroke of each device overlaps with the beginning of the injection stroke of the next sequential device so that the volume of the continuous stream of molten polymer remains approximately constant. When two devices are used, the injection time of each has to be greater than the refill time to produce an overlap.

It has been found that it is possible to maintain an approximately constant volume continuous stream of molten polymer with two injection devices, but with three injection devices the control of the ratio of injection time to refill time is not so critical.

The die may be in the form of a two part tool, the parts co-operating to produce an open cavity die. Continuous lengths of fibrous reinforcement are passed through the cavity through passages preferably provided on the parting line of the die.

Suitably the fibres pass through the die cavity in a direction transverse to the feed direction of the molten polymer. This helps maximise the impregnation of the fibres.

The fibrous reinforcement may be in the form of a roving, cloth, mat, tape, weave or linear profile, the only requirement being that the die is suitably shaped. Suitable fibres include glass, carbon, ceramic, inorganic or organic fibres, or mixtures of these.

The method and apparatus are particularly suitable for a polymer which is a thermoplastic or a thermoset whose behavioural characteristics are similar to a thermoplastic.

The invention will now be described by way of example with reference to the accompanying drawings in which:

Figure 1 is a schematic view of one embodiment of an apparatus in accordance with the invention;

Figure 2 is a schematic view of a second embodiment of an apparatus in accordance with the invention:

Figure 3 is a similar view to Figure 2 but showing another step in the operation of the apparatus shown in Figure 2;

Figure 4 is a schematic view of a third embodiment of an apparatus in accordance with the invention;

Figure 5 is a similar view to Figure 4 but showing another step in the operation of the apparatus shown in Figure 4;

Figure 6a, b, c and d are oblique views of one half of a number of examples of dies suitable for use with the apparati of Figures 1 to 5 and

Figure 7a, b and c are schematic views of a number of examples of forms of fibrous reinforcement which may be impregnated with polymer using the apparati shown in Figures 1 to 5.

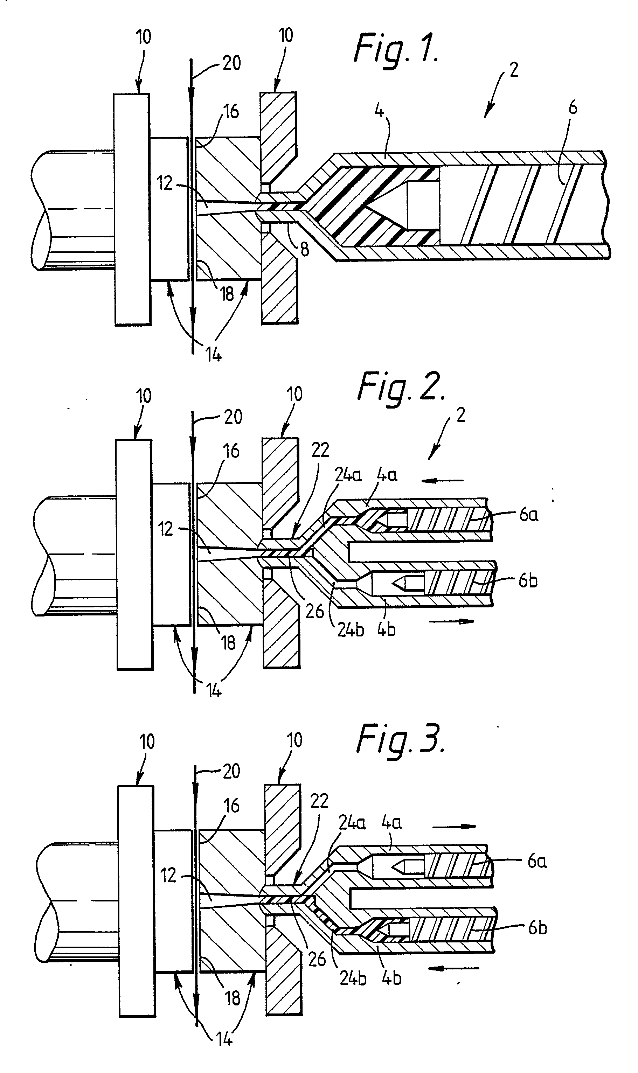

The apparatus shown in Figure 1 comprises an injection moulding machine 2 with a single injection cylinder consisting of a barrel 4 in which a ram or screw 6 is provided. A nozzle 8 is secured to the outlet of the barrel 4 at one end or it may be integrally formed therewith. The other end of the nozzle 8 is positioned during the process so that the nozzle outlet is aligned with a feed channel 12 which connects it to the cavity of an open cavity die 14, held between the platens 10 of the machine 2.

The die 14 comprises two or more parts and preferably includes an entrance passage and an exit passage 16, 18 on a parting line of the die so that a continuous length of reinforcement 20 can be passed through the cavity via the passages 16, 18 in the direction of the arrows.

Alternatively, rather than being a continuous length, the fibrous reinforcement could be preformed into the shape of the article which is to be produced. In this case no entrance and exit passages would be necessary, rather the die would be broken open, the preformed fibrous reinforcement positioned in the die cavity, which would be suitably shaped, and the die closed ready for injection of the molten polymer.

The injection cylinder 4 of the injection moulding machine 2 operates in the known manner, that is, a charge of polymer granules from the feed to the machine (not shown) is heated to a high temperature in the barrel 4. Once the desired temperature has been reached the molten charge is injected by the ram or screw 6 through the nozzle 8 and thence to the die cavity.

In the case where a continuous length of fibrous reinforcement is to be impregnated, the pull through of the reinforcement 20 would be controlled so that it only takes place during the injection part of the moulding machine cycle, that is reinforcement 20 would be held stationary, unless positional changes prior to injection were being carried out.

In the case of non-continuous reinforcement, after each injection step the die would be broken open and the impregnated reinforcement removed and replaced by another fibrous substrate whilst the barrel was being recharged and the heating of the new charge of polymer was taking place.

The apparatus shown in Figure 2 is similar in many ways to that shown in Figure 1 and only the differences will be discussed below. The main and most important difference is that the moulding machine 2 has two injection cylinders comprising two barrels 4a,4b in each of which a ram or screw 6a, 6b is provided. A manifold 22 is fitted to the ends of the two injection barrels 4a and 4b and includes a passageway 24a, 24b connected to each of their outlets. These passageways 24a, 24b merge into a single passageway 26 at the opposite end of the manifold 22 which acts as a nozzle and, in a similar fashion shown to the arrangement shown in Figure 1, is in contact with the die 14 during the process so that its outlet is alinged with feed channel 12 which connects it to the cavity of the die 14 which is held between the platens 10 of the machine 2.

Although the die 14 is shown similar to that of Figure 1, i.e. with entrance and exit passages 16, 18 to allow a continuous length of fibrous reinforcement 20 to be passed through the cavity of the die 14, it can also be employed to impregnate a fibrous reinforcement which has been preformed into a desired shape if desired. The apparatus shown in Figures 2 and 3 allows such a preformed substrate to be coated with a mixture of polymers since two different types of polymers can be simultaneously melted in the two barrels 4a and b and then injected into the manifold where they will become mixed in passage 26 before injection into the die cavity.

However, the most likely operation of the apparatus shown in Figure 2 and 3 is that the injection cylinders would be controlled, preferably by computer, so that they alternately inject molten polymer into the die 14, that is, while one is injecting the other is filling, so that a continuous stream of molten polymer is supplied to the die and continuous coating of a length of fibrous reinforcement can be achieved. This former operation is illustrated in the Figures. In Figure 2 the upper cylinder is injecting material and when this is complete the screw or ram 6a moves back to allow the barrel 4a to fill and the other cylinder begins its injection stroke as shown in Figure 3.

The control of the injection cylinders is arranged so that there is an overlap between the two injection strokes. When injection from one cylinder is almost complete, injection from the second cylinder begins to ensure that the continuous stream of molten polymer supplied to the die is of approximately constant volume.

Dissimilar materials can, as mentioned above, be held in the injection cylinders of the moulding machine 2. Sequential injection would then result in the substrate being impregnated in alternate discrete sections with the dissimilar materials. The discrete sections would be separated by zones in which the dissimilar materials had become mixed during the injection cross-over period. Of course the injection cross-over period could be increased to the extent that both cylinders will operate simultaneously, in which case the fibrous reinforcement would be impregnated with a mixture and could not be pulled continuously through the die cavity but rather would have to be stationary (unless positional changes prior to injection were being carried out) during the refill and heating steps of the cycle of injection cylinder operation.

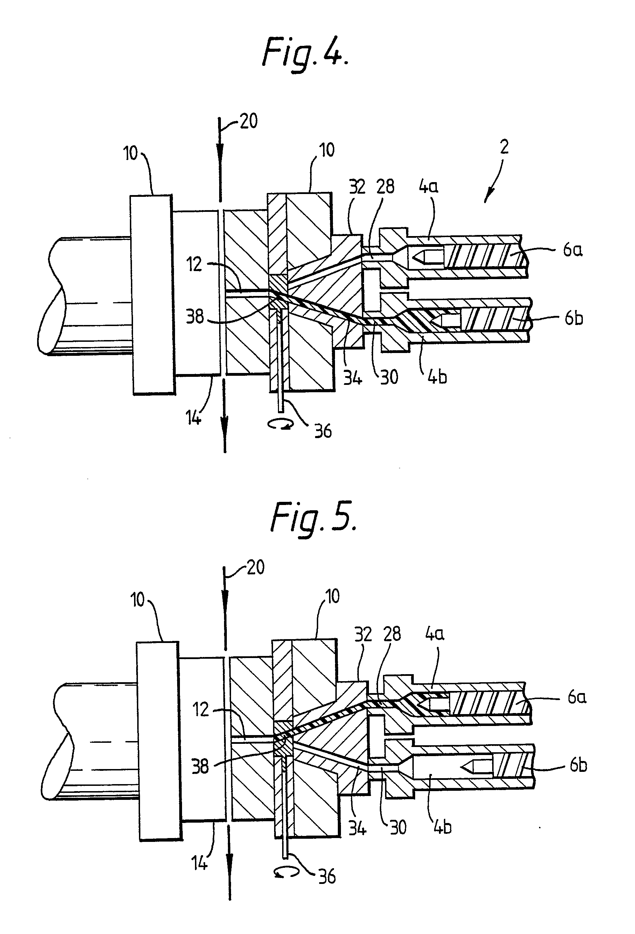

The apparatus shown in Figures 4 and 5 differs only from that shown in Figure 2 and 3 in the arrangement of the connection of the die to the cylinders. In this case the outlets 28, 30 of each barrel 4a, 4b passes through a manifold 32 secured to the platens 10. The manifold 32 contains passageways 34 connected to the outlets 28, 30 of the barrels 4a, 4b. A valve 36 is secured to the manifold 32 and its outlet is aligned with the feed passageway 12 of the cavity of the die 14. The valve 36 contains a conduit 38 extending from its outlet which can be brought in to alignment with either of the passageways 34 in the manifold 32 to thereby connect the outlet 28, 30 of the barrel 4a, 4b with the feed passageway 12.

The apparatus of Figures 4 and 5 is not generally operated so that the two cylinders eject molten polymer simultaneously, but rather is operated such that they eject molten polymer sequentially. In Figure 4 polymer is being ejected from the barrel 4b. It passes through the outlet 30 up passageway 34 and through the passageway 38 of the valve which has been rotated into the correct position to pass the polymer into the feed passageway 12. The screw 6b is then moved backwards and the barrel 4b recharged. Simultaneously the screw 6a moves forward to eject polymer which has been melted in the barrel 4a into the outlet 28 along the passageway 34 in manifold 32 and through passageway 38 in valve 36 which has been rotated into the correct position (see Figure 5). The valve 36 must therefore be continuously controlled so that when a cylinder is injecting, its outlet is connected to the feed channel 12. The valve must also be capable of passing material from both cylinders simultaneously to the channel 12 during the overlap between the two injection strokes which is necessary to ensure a continuous supply of molten polymer to the die cavity.

The stream of molten polymer which is supplied to the die cavity feed channel from either the single barrel 4 of the apparatus of Figure 1 or the pair of barrels 4a, 4b of the apparatus of Figures 2 to 5 is at a very high pressure (the maximum being about 280 MPa). This high injection pressure and the high temperatures which can be achieved not only causes the melt to have low viscosity but also leads to a very high speed of melt delivery. This high delivery speed gives good impregnation of the fibres. The low viscosity of melt ensures that there is good wetting of the fibres.

The apparatus shown in Figures 1 to 5 could be employed to coat several reinforcements simultaneously by providing a die with several cavities or a plurality of single cavity dies, the feed channels in either case leading from the manifold, in the case of the apparatus for Figures 2 to 5, or the nozzle in the case of the apparatus of Figure 1.

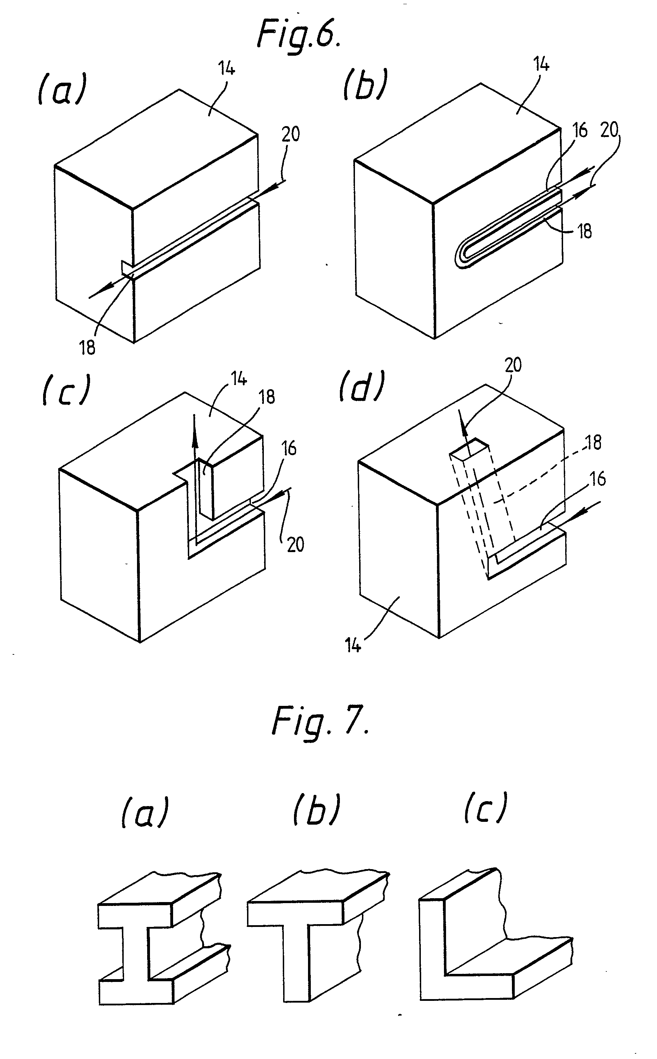

The number of cylinders employed can be greater than two. When a continuous process is required, that is, a continuous supply of molten polymer is to be provided in the die cavity, the use of three of more cylinders can be beneficial since this ensures that the ratio of injection time to refill time does not require such careful control. The die 14 is preferably in the form of a two part tool, the parts cooperating to produce an open cavity die, and the passageways for the fibrous reinforcement being provided on the parting line of the die. The fibrous reinforcement can be passed from one side of the die tool to the other as shown in Figures 1 to 5 and Figure 6a. However, it is not necessary for the exit face to be opposite the entry face and Figures 6b and c illustrate die tools in which the entry and exit faces are the same (Figure 6b) and in which the exit plane is transverse to the entry plane (Figure 6c). Although, as noted above, it is desirable to locate the entry and exit planes on a parting line since this makes it easier to locate the initial length of reinforcement to be coated and also facilitate removal of blockages, this is not essential. Figure 6d illustrates an arrangement in which the exit passageway is not on the parting line.

The polymer employed can be a thermoplastic or a thermoset, in particular one which acts similarly to a thermoplastic. Examples of suitable polymers are 6,6 polyamide and polypropylene. The reinforcement can comprise, for example, glass, carbon, ceramic, inorganic or organic fibres or mixtures of any of these. The reinforcement can be pretreated with, for example, binding agents, coupling agents, dispersing aids, compatibilizers, or any other additives. The reinforcement can be in the form of a roving, woven cloth, mat or tape or preformed profile with the die design being different for each case. Examples of preformed profiles are shown in Figure 7. This illustrates fibrous reinforcement which has been preshaped and preferably held together in some manner, e.g by a binder, to form an I-section (a), T-section (b) or L-section (c). When such sections are impregnated they can be used as structural articles on their own or as reinforcement members for other articles, for example, in the form of an insert.

Impregnated material if cut or chopped can be used as feed stock for injection moulding, compression moulding or other type of moulding processes or in continuous form as the feed stock for filament winding, pultrusion, weaving, tape placement, lay-up or film stacking process.

## Claims

1. A method of forming a fibre reinforced product from a polymer and fibrous reinforcement comprising positioning the fibrous reinforcement in a cavity of a die, feeding the polymer into at least one device operable to melt a portion of the polymer and raise the temperature of the polymer portion and then to inject the molten polymer portion at high pressure into the die cavity and controlling the operation of the device so that molten polymer is injected into the cavity when the reinforcement is positioned therein so that the reinforcement is impregnated with the molten polymer.

2. A method as claimed in Claim 1 wherein two or more melt and injection devices are employed.

3. A method as claimed in Claim 2 wherein the devices are controlled so that they at least partially simultaneously inject molten polymer into the die cavity.

4. A method as claimed in either Claim 2 or 3 wherein the devices are controlled so that a continuous stream of molten polymer is injected into the die cavity.

5. A method as claimed in Claim 4 wherein the operation of the devices is controlled so that each device injects material into the die cavity sequentially.

6. A method as claimed in any preceding Claim wherein a continuous length of fibrous reinforcement is employed, the method including passing the length of fibrous reinforcement through the die cavity as molten polymer is being injected into the cavity.

7. A method as claimed in Claim 6 wherein the fibrous reinforcement is in the form of a roving, cloth, mat, tape, weave or profile.

8. A method as claimed in any one of Claims 1 to 3 wherein fibrous reinforcement is formed into a desired configuration and the method comprises opening the die, positioning the pre-formed fibrous reinforcement in the cavity, closing the die, impregnating the reinforcement and then removing the impregnated reinforcement from the die.

9. A method as claimed in any preceding Claim wherein the fibrous reinforcement is treated with either a binding agent, coupling agent, dispersing aid, compatibiliser or other additive prior to impregnation with polymer.

10. Apparatus for forming a fibre reinforced product from a polymer and fibrous reinforcement comprising at least one device operable to melt a portion of the polymer and heat it and then to inject it at high pressure into a cavity of a die, the die being arranged so that the reinforcement can be positioned in the cavity before or as polymer is injected therein and means for controlling the operation of the device(s) so that molten polymer is injected into the die cavity when the fibrous reinforcement is positioned therein so that the fibrous reinforcement is impregnated with molten polymer.

11. Apparatus as claimed in Claim 10 wherein a connector is provided for the or each device which is operable to connect the output of the device with the input of the die cavity.

12. Apparatus as claimed in Claim 11 wherein the connectors are in the form of a manifold, the outlet of which is connected to the input of the die cavity and which has an inlet connected to the or each device.

13. Apparatus as claimed in either Claim 11 or 12 wherein two or more devices are provided, the connectors being operable to allow molten polymer to be injected into the die cavity from each device either sequentially, partially simultaneously or fully simultaneously.

14. Apparatus as claimed in Claim 13 wherein the connectors are further operable to mix polymer supplied from the two or more devices prior to its injection into the die cavity.

15. Apparatus as claimed in any one of Claims 10 to 14 wherein the die is formed with an entrance passage leading to and an exit passage leading from the die cavity whereby a continuous length of fibrous reinforcement may be passed through the die cavity by way of the passages and impregnated with polymer.

16. Apparatus as claimed in any one of Claims 10 to 15 wherein the devices are injection moulding machines.

Fig.1.

Fig.2.

Fig.3.

# Fig.4.

# Fig.5.

## Fig.6.

(a)

(b)

(c)

(d)

## Fig. 7.

(a)

(b)

(c)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 504 449 (REGIE NATIONALE DES USINES RENAULT) * Page 1, lines 10-17; page 2, lines 23-29; page 3, lines 32-36; claims, specially no 2; figures, specially no 1 * | 1,6-8, 10 | B 29 C 67/14 |
| Y | | 2-5,11- 16 | |
| Y | US-A-4 005 167 (D. STERN) * Abstract; figures 1-9; column 1, lines 25-42,very specially 39-42; lines 58-68; column 2, lines 5-13; line 40 - column 3, line 66; column 4, line 21 - column 5, line 22; claims 1-6 * & GB-A-12 40 824 * * | 2-5,11- 16 | |
| A | US-A-3 954 379 (O. KLOCKE) * Abstract; figures 2-4; column 2, lines 39-45; column 3, lines 1-54; very specially lines 6,10; column 6, lines 26-30; claims 1-9 * | 1,6,7,9 ,10 | |
| A | EP-A-0 269 197 (INDUSTRIAL TECHNOLOGY RESEARCH INSTITUTE) * Claims, figures * | 1,6,10 | TECHNICAL FIELDS SEARCHED (Int. Cl.5) B 29 C B 29 B |
| A | EP-A-0 206 134 (BASF AG) * Claims, figures * | 1,6,10 | |

The present search report has been drawn up for all claims

| Place of search | Date of completion of the search | Examiner |
|---|---|---|
| THE HAGUE | 23-11-1989 | MOLTO PINOL F.J. |